# EUROPÄISCHE PATENTANMELDUNG

(11) **EP 3 812 618 A1**
(43) Veröffentlichungstag der Anmeldung: **28.04.2021**
(21) Anmeldenummer: 20198073.7
(22) Anmeldetag: 24.09.2020
(51) Int. Cl.: F16H 3/66, F16H 37/08

(54) **SCHALTGRUPPE FÜR LASTSCHALTGETRIEBE**

(30) Priorität: 23.10.2019 DE 102019216299
(71) Anmelder: Deere & Company, Moline, IL 61265 (US)
(72) Erfinder: Raisch, Stefan, 68163 Mannheim (DE)
(74) Vertreter: Dehnhardt, Florian Christopher

(57) **Zusammenfassung**

Die Erfindung betrifft eine Schaltgruppe für ein Lastschaltgetriebe mit einer Verzweigungseinheit (40), die eine Planetenstufe (41) und eine der Planetenstufe (41) zugeordnete Verzweigungskupplung (45) aufweist, wobei die Verzweigungseinheit (40) derart eingerichtet ist, dass eine mechanische Leistung in einem ersten Schaltzustand über einen ersten oder einen zweiten Leistungspfad (I, II) und in einem zweiten Schaltzustand sowohl über den ersten als auch über den zweiten Leistungspfad (I, II) von einer ersten auf eine zweite Welle (10, 20) übertragen werden kann. Erfindungsgemäß sind in dem ersten Leistungspfad (I) eine und in dem zweiten Pfad (II) zwei einzeln schaltbare Übertragungseinheiten (50, 60, 70, 80) vorgesehen, die sich hinsichtlich ihres Übersetzungsverhältnisses voneinander unterscheiden.

## Beschreibung

Die Erfindung betrifft eine Schaltgruppe für ein Lastschaltgetriebe mit einer Verzweigungseinheit, die eine Planetenstufe und eine der Planetenstufe zugeordnete Verzweigungskupplung aufweist, wobei die Verzweigungseinheit derart eingerichtet ist, dass eine mechanische Leistung in einem ersten Schaltzustand der Verzweigungskupplung über einen ersten oder einen zweiten Leistungspfad und in einem zweiten Schaltzustand der Verzweigungskupplung sowohl über den ersten als auch über den zweiten Leistungspfad auf eine zweite Welle übertragen werden kann.

Lastschaltgetriebe kommen vorzugsweise bei Landmaschinen zum Einsatz und dienen der Übertragung einer mechanischen Leistung von einem Antriebsmotor auf einen Antriebsstrang. Hierbei ist es entscheidend, dass die Getriebe derart ausgelegt sind, dass sie eine große Getriebespreizung ermöglichen und zugleich eine geringe zu synchronisierende Massenträgheit aufweisen. Aus diesem Grunde verfügen derartige Getriebe üblicherweise über eine Vielzahl von Gängen, um die große Getriebespreizung überbrücken zu können. Diese einzelnen Gänge werden durch die Schaltung einzelner Schaltgruppen zueinander realisiert, wobei eine erste Schaltgruppe üblicherweise als Gangschaltgruppe und eine zweite Schaltgruppe als Bereichsschaltgruppe bezeichnet wird. Jede dieser Schaltgruppen weist eine bestimmte Anzahl von schaltbaren Gängen auf, wobei sich die Gesamtzahl der Gänge aus einer Multiplikation der Gänge aus beiden Schaltgruppen ergibt.

Schaltgruppen der eingangs beschriebenen Art sind grundsätzlich aus dem Stand der Technik bekannt, wobei es für den Fachmann stets ein Bestreben ist, einerseits die Anzahl der Gänge zu erhöhen, um die Übergänge hinsichtlich der Übersetzungsverhältnisse zwischen den einzelnen Gängen möglichst fließend innerhalb der Getriebespreizung ausbilden zu können und andererseits die Anzahl der hierfür notwendigen Komponenten und Baueinheiten zu verringern. Dies führt nicht nur zu einer Kostenersparnis. Durch die geringere Anzahl von Komponenten kann auch der notwendige Bauraum für das Lastschaltgetriebe deutlich verringert werden. Durch die geringere Anzahl von Komponenten sinken auch die Fehleranfälligkeit bzw. der Wartungsaufwand.

Ausgehend von dem bekannten Stand der Technik liegt der vorliegenden Erfindung daher die Aufgabe zugrunde, eine Schaltgruppe anzugeben, die sich einerseits durch eine geringe Anzahl von Komponenten bei einer gleichzeitig hohen Anzahl von Gängen auszeichnet.

Diese Aufgabe wird gelöst durch eine Schaltgruppe gemäß Anspruch 1, wobei in dem ersten Leistungspfad eine und in dem zweiten Pfad zwei einzeln schaltbare Übertragungseinheiten vorgesehen sind, die sich hinsichtlich ihres Übersetzungsverhältnisses voneinander unterscheiden. Hierbei ist es besonders vorteilhaft, wenn das Verhältnis der Übertragungseinheiten in dem zweiten Leistungspfad zum ersten Leistungspfad 2:1 beträgt.

Die Übertragungseinheiten können einzeln über jeweils einen Leistungspfad geschaltet werden, sodass sich bei drei Übertragungseinheiten insgesamt drei unterschiedliche Gänge herausbilden. Durch Kombination von jeweils zwei Übertragungseinheiten in jeweils einem Leistungspfad ergeben sich zwei weitere mögliche Gänge, sodass mit insgesamt drei Übertragungseinheiten fünf Gänge realisierbar sind. Da jede der Übertragungseinheiten über eine jeweils zugeordnete Kupplung einzeln schaltbar ist, verfügt die Schaltgruppe bei einer solchen Ausgestaltung zuzüglich der Verzweigungskupplung über insgesamt vier Kupplungen. Im Gegensatz zu einer Ausgestaltung in Form einer üblichen Stirnradgruppe kann somit durch die Kombination zweier Leistungspfade auf eine Kupplung verzichtet werden.

Der Begriff Verzweigungseinheit meint im Rahmen der Erfindung eine Kombination aus einer Planetenstufe und einer Verzweigungskupplung, durch die es ermöglicht wird, die in die Schaltgruppe einfließende Leistung auf zwei Leistungspfade aufzuteilen. Dies wird dadurch ermöglicht, dass Planetenstufen üblicherweise über drei miteinander kombinierbare Ein- bzw. Ausgänge verfügen, die einzeln an Wellen angebunden werden können. Eine übliche Ausgestaltung besteht aus einer Kombination aus einem Sonnenrad, mehreren das Sonnenrad umlaufenden Planetenrädern, die über einen gemeinsamen Planetenträger miteinander verbunden sind und ein Hohlrad, das wiederum an die Planetenträger anschließt. Die Verzweigungseinheit kann hierbei bereits am Leistungseingang oder aber auch am Leistungausgang angeordnet sein.

Besonders vorteilhaft ist eine Ausgestaltung, bei der nicht nur die Verzweigungseinheit eine Planetenstufe aufweist, sondern auch zumindest eine der Übertragungseinheiten als Planetenstufe ausgebildet ist. Demnach kann über eine der Planetenstufen die Leistung aufgeteilt und über die andere Planetenstufe wieder zusammengeführt werden, wobei jeweils eine der Planetenstufen mit der ersten und die jeweils andere Planetenstufe mit der zweiten Welle verbunden ist.

Bei einer Ausgestaltung mit entsprechend zwei Planetenstufen kann gemäß einer ersten Alternative die erste Welle mit der zumindest einen als Planetenstufe ausgebildeten Übertragungseinheit und die zweite Welle mit der Verzweigungs-einheit verbunden sein. Gemäß einer zweiten Ausgestaltung kann die zweite Welle mit der zumindest einen als Planetenstufe ausgebildeten Übertragungs-einheit und die erste Welle mit der Verzweigungseinheit verbunden sein.

Wie bereits zuvor erläutert, bestehen Planetenstufen üblicherweise aus einer Kombination aus einem Sonnenrad, einem Planetenträger und einem Hohlrad. Sofern zumindest eine der Übertragungseinheiten als Planetenstufe ausgebildet ist, hat sich jedoch auch eine Ausgestaltung als besonders vorteilhaft erwiesen, bei der zwei koaxial zueinander angeordnete Planetenträger vorgesehen sind, wobei die Planeten des ersten Planetenträgers mit den Planeten des zweiten Planetenträgers in Eingriff stehen und wobei die Planetenträger miteinander gekoppelt sind. Es handelt sich somit um eine Planetenstufe, bei der zwei Gruppen von Planeten in radialer Richtung hintereinander angeordnet sind, wodurch in einer einfachen Art und Weise eine Umkehr der Drehrichtung bewirkt werden kann. Dies ermöglicht beispielsweise, dass nicht alle Übertragungseinheiten eine Drehrichtung der zweiten Welle in eine gleiche Drehrichtung bewirken. Vielmehr kann beispielsweise durch eine der Übertragungseinheiten eine Umkehr der Drehrichtung erzielt werden, wodurch auch Rückwärtsgänge durch direktes Zuschalten möglich sind.

Bezüglich der Planetenstufe der Verzweigungseinheit hat sich eine Ausgestaltung als vorteilhaft erwiesen, bei der die Verzweigungseinheit zwei nebeneinander angeordnete Planeteneinheiten aufweist, die jeweils ein Sonnenrad und einen das Sonnenrad umlaufenden Planetenträger aufweisen, wobei sich die Planeteneinheiten hinsichtlich ihres Übersetzungsverhältnisses voneinander unterscheiden und die Planetenträger miteinander verbunden sind. Eine solche Ausgestaltung ist besonders dann sinnvoll, wenn die Verzweigungseinheit am Leistungseingang angeordnet ist, wobei in einem ersten Schaltzustand der Planetenträger bevorzugt unmittelbar mit der ersten Welle verbunden ist und die zweite Welle mit einem der Sonnenräder in Verbindung steht.

Grundsätzlich können alle Übertragungseinheiten im Rahmen der Erfindung als Planetenstufe ausgebildet sein. Alternativ ist aber zumindest eine der Übertragungseinheiten im ersten und/oder zweiten Leistungspfad als Stirnradstufe ausgebildet. Bevorzugt weist diese Stirnradstufe dann zwei Stirnradsätze mit jeweils einem Antriebs- und einem Abtriebszahnrad auf, wobei das Abtriebszahnrad des ersten Stirnradsatzes über eine Nebenwelle mit dem Antriebszahnrad des zweiten Stirnradsatzes verbunden ist. Beide Stirnradsätze weisen jeweils ein bestimmtes Übersetzungsverhältnis auf, wobei sich das Gesamtübersetzungsverhältnis der Stirnradstufe aus einer Multiplikation des Übersetzungsverhältnisses aus dem ersten und dem zweiten Stirnradsatz ergibt.

Gemäß einer Weiterbildung der Erfindung ist zumindest eine der Übertragungseinheiten im ersten und/oder im zweiten Leistungspfad als Direkt-übersetzung ausgebildet. Direktübersetzung meint im Rahmen der Erfindung, dass die Übertragungseinheit ein Übersetzungsverhältnis von i=1 ausbildet, sodass die erste und die zweite Welle die gleiche Drehgeschwindigkeit aufweisen. Grundsätzlich reicht es also aus, wenn diese Übersetzungseinheit lediglich aus einer Kupplung besteht, die ein unmittelbares oder mittelbares Kuppeln der beiden Wellen miteinander ermöglicht. Allerdings kann dennoch die Leistung auch über Komponenten einzelner Übertragungseinheiten geführt werden, die dann die Leistung ebenfalls unmittelbar übertragen.

Damit jede der Übertragungseinheiten einzeln geschaltet werden kann, weist jede Übertragungseinheit jeweils eine Übertragungskupplung auf oder ist als Übertragungskupplung ausgebildet. Als Kupplungsart eignet sich insbesondere eine Lamellenkupplung, da diese auch bei unterschiedlichen Drehgeschwindigkeiten der zu koppelnden Elemente betätigt werden kann und durch Reibschluss eine Synchronisierung der Drehgeschwindigkeiten bewirkt.

Wie bereits zuvor erläutert, können die Übertragungseinheiten im ersten und im zweiten Leistungspfad bei einer einzelnen und damit nicht kombinierten Zuschaltung eine Rotation der Welle in eine erste Drehrichtung bewirken. Alternativ ist es aber auch möglich, dass einzelne Übertragungseinheiten eine entgegengesetzte Rotation in eine zweite Drehrichtung bewirken. Unabhängig von der konkreten Ausgestaltung ist es jedoch stets von besonderem Vorteil, wenn einzelne Gänge eine Umkehrung der Drehrichtung bewirken, sodass sowohl ein Vorwärts- als auch ein Rückwärtsbetrieb möglich ist. Besonders bevorzugt weist die Schaltgruppe drei Vorwärtsgänge und zwei Rückwärtsgänge auf. Hierzu haben sich zwei Ausgestaltungsvarianten als besonders vorteilhaft erwiesen.

Gemäß einer ersten Variante sind alle Übertragungseinheiten in dem ersten und dem zweiten Leistungspfad so ausgebildet, dass sie in dem ersten Schaltzustand der Verzweigungskupplung eine Rotation der zweiten Welle in eine erste Dreh-richtung bewirken, wobei die Leistungspfade in dem zweiten Schaltzustand derart miteinander zusammengeführt werden, dass die zweite Welle eine Rotation in eine zweite Drehrichtung aufweist, die der ersten Drehrichtung entgegengesetzt ist. Demnach wird ein Rückwärtsbetrieb erst durch Zusammenführen der beiden Leistungspfade ermöglicht. Dies kann beispielsweise über eine Planetenstufe mit einem Hohlrad bewirkt werden, wobei in einem solchen Fall bevorzugt die Verzweigungseinheit die Planetenstufe bildet, die die beiden Leistungspfade zusammenführt.

Alternativ sind zumindest zwei Übertragungseinheiten in dem zweiten Leistungs-pfad so ausgebildet, dass sie in dem ersten Schaltzustand der Verzweigungs-kupplung eine entgegengesetzte Drehrichtung der zweiten Welle bewirken. Somit kann zumindest ein für eine Rückfahrt vorgesehener Gang direkt geschaltet werden, wobei die Übersetzungsverhältnisse der einzelnen Übertragungseinheiten derart ausgebildet sind, dass sich auch bei einer Kombination der beiden Leistungspfade miteinander ein zusätzlicher Vorwärts- und ein zusätzlicher Rückwärtsgang ausbildet, sodass auch hier insgesamt drei Vorwärts- und zwei Rückwärtsgänge vorgesehen sind.

Die Anzahl der Übertragungseinheiten kann grundsätzlich auch erhöht werden. Besonders bevorzugt sind aber stets exakt eine Übertragungseinheit mehr im zweiten Leistungspfad angeordnet als im ersten Leistungspfad.

Gegenstand der Erfindung ist ferner ein Getriebe, insbesondere ein Lastschalt-getriebe, mit einer erfindungsgemäßen Schaltgruppe, wobei die Verzweigungseinheit im Leistungsfluss vor oder hinter den Übertragungseinheiten angeordnet ist.

Bevorzugt weist das Getriebe zumindest eine weitere Schaltgruppe auf, die der erfindungsgemäßen Schaltgruppe vor- und/oder nachgeschaltet ist.

Gegenstand der Erfindung ist ferner ein Verfahren zum Schalten der erfindungsgemäßen Schaltgruppe, wobei die Verzweigungskupplung für einen ersten Schaltzustand geschlossen ist und eine der Übertragungseinheiten aus dem ersten und zweiten Leistungspfad zugeschaltet wird und wobei die Verzweigungskupplung für einen zweiten Schaltzustand geöffnet ist und jeweils eine der Übertragungseinheiten aus dem ersten und dem zweiten Leistungspfad zugeschaltet wird.

Im Folgenden wird die Erfindung anhand eines Ausführungsbeispiels näher erläutert.

Es zeigen:
- Fig. 1: die Schaltgruppe gemäß einer ersten Ausführungsform,
- Fig. 2: die Schaltgruppe gemäß der Fig. 1 in einem Leistungsfluss-diagramm,
- Fig. 3: eine Schaltmatrix für eine Schaltgruppe gemäß der Fig. 1,
- Fig. 4: eine Schaltgruppe gemäß einer zweiten Variante,
- Fig. 5: eine Schaltgruppe gemäß einer dritten Variante,
- Fig. 6: ein Leistungsflussdiagramm für die Schaltgruppen gemäß der Figuren 4 und 5
- Fig. 7: eine Schaltmatrix für die Schaltgruppen gemäß den Figuren 4 und 6.

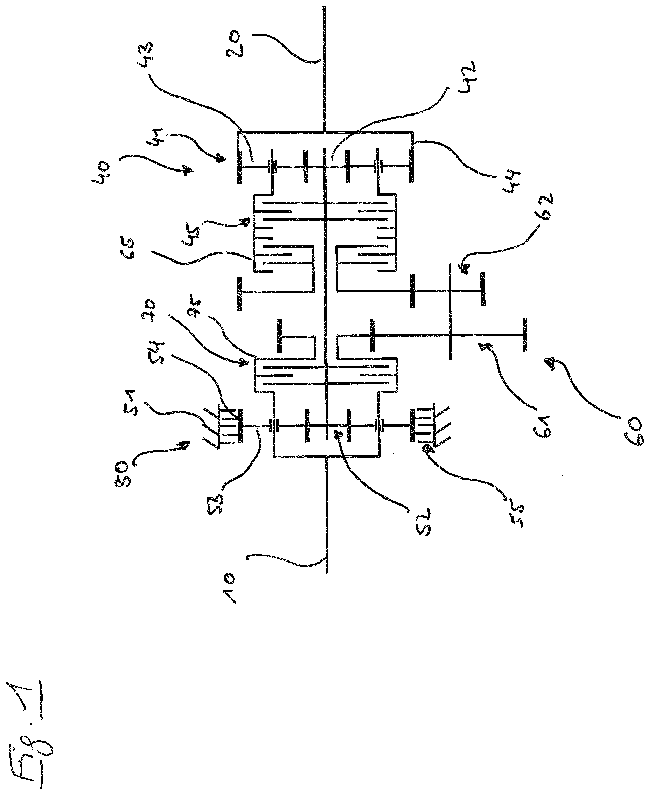

Die Fig. 1 zeigt die erfindungsgemäße Schaltgruppe gemäß einer ersten Variante. Die Leistung wird über eine erste Welle 10 in die Schaltgruppe eingebracht und über die Schaltgruppe auf eine zweite Welle 20 übertragen. Die Schaltgruppe weist eine Verzweigungseinheit 40 auf, die aus einer Planetenstufe 41 und einer Verzweigungskupplung 45 besteht. Bei der Variante gemäß der Fig. 1 ist die Verzweigungseinheit 40 im Leistungsfluss am Ende angeordnet und schließt unmittelbar an die zweite Welle 20 an. Die Planetenstufe 41 der Verzweigungseinheit 40 verfügt über ein Sonnenrad 42, einen Planetenträger 43 mit mehreren das Sonnenrad umlaufenden Planeten sowie über ein Hohlrad 44, das unmittelbar mit der zweiten Welle 20 verbunden ist.

An die erste Welle 10 schließt eine ebenfalls als Planetenstufe ausgebildete Übertragungseinheit 50 an, die analog zur Verzweigungseinheit 40 über ein Sonnenrad 52, einen Planetenträger 53 und über ein Hohlrad 54 verfügt. Der Planetenträger 53 ist unmittelbar mit der ersten Welle 10 verbunden. Das Hohlrad 54 kann über eine als Hohlradbremse ausgebildete Übertragungskupplung 55 gegenüber einem Gehäuse 51 blockiert werden.

Über die Übertragungseinheit 50 erfolgt eine Verzweigung der Leistung auf einen ersten und einen zweiten Leistungspfad I, II, wobei die Verzweigungseinheit 40 die beiden Leistungspfade I, II wieder zusammenführt und auf die zweite Welle 20 überträgt.

In dem ersten Leistungspfad I ist lediglich eine Übertragungseinheit 60 vorgesehen, die als Stirnradsatz ausgebildet ist. Diese Übertragungseinheit 60 schließt unmittelbar über den Lamellenträger einer dritten Übertragungseinheit 70 und den Planetenträger 53 der ersten Übertragungseinheit 50 an die erste Welle 10 an und wird unabhängig von der Stellung der einzelnen Übertragungs-kupplungen 55, 65, 75 stets angetrieben, sofern die erste Welle 10 in Rotation versetzt wird. Die Stirnradstufe besteht aus zwei einzelnen Stirnradsätzen 61, 62, über die die Rotation auf die Übertragungskupplung 65 übertragen wird. Diese schließt wiederum unmittelbar an den Planetenträger 43 der Verzweigungseinheit 40 an.

Durch Schließen der Verzweigungskupplung 45 wird bewirkt, dass sowohl das Sonnenrad 42 als auch der Planetenträger 43 der Planetenstufe 41 der Verzweigungseinheit 40 die gleiche Rotationsgeschwindigkeit aufweisen. Dies bedeutet auch, dass das Hohlrad 44 und damit auch die zweite Welle 20 die gleiche Rotationsgeschwindigkeit aufweisen, die über den Stirnradsatz der Übertragungseinheit 60 vorgegeben werden.

Sofern bei geschlossener Verzweigungskupplung 45 lediglich die Übertragungs-kupplung 75 geschlossen wird, werden das Sonnenrad 52 und der Planetenträger 53 der Übertragungseinheit 50 gegeneinander geblockt, sodass beide Wellen 10, 20 die gleiche Rotationsgeschwindigkeit aufweisen. Dementsprechend stellt das Schalten der Übertragungseinheit 70 einen Direktgang dar.

Ein weiterer Schaltzustand kann dadurch erreicht werden, dass anstelle der Übertragungskupplungen 65, 75 die Übertragungskupplung 55 geschlossen wird, wodurch das Hohlrad 54 gegenüber dem Gehäuse 51 blockiert wird. Sowohl die Übertragungseinheit 50 als auch die Übertragungseinheit 70 sind hierbei im zweiten Leistungspfad II angeordnet und können daher in einem geöffneten Zustand der Verzweigungskupplung 45 mit der als Stirnradsatz ausgebildeten Übertragungseinheit 60 kombiniert werden.

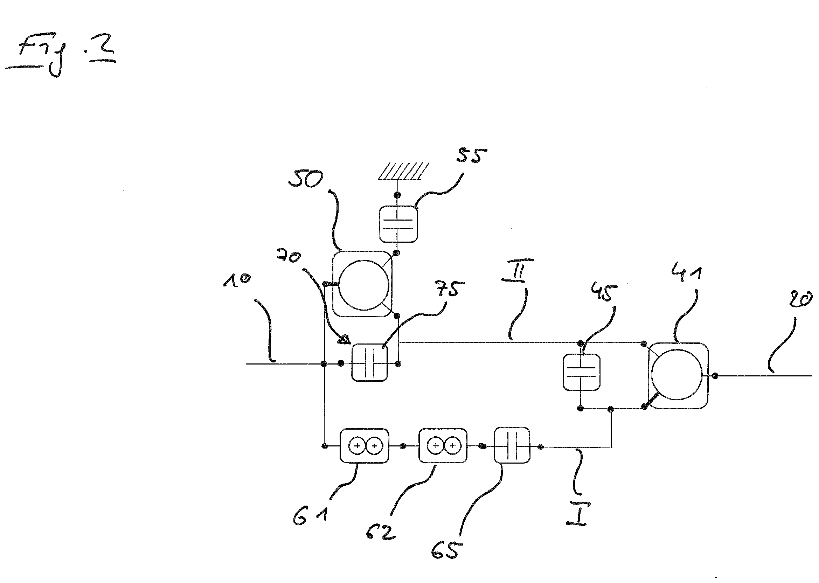

Dieses Schaltprinzip geht aus der Fig. 2 deutlicher hervor. Die Fig. 2 zeigt, wie eine Leistung von der ersten Welle 10 auf die zweite Welle 20 übertragen werden kann, wobei die Übertragungskupplungen 55, 75 bzw. die Übertragungseinheiten 50, 70 in einem zweiten Leistungspfad II und die Stirnradsätze 61, 62, bzw. die Übertragungskupplung 65 in dem ersten Leistungspfad I angeordnet sind. Sofern die Verzweigungskupplung 45 geöffnet ist, können die beiden Leistungspfade I, II in der Planetenstufe 41 miteinander kombiniert werden. Sofern die Verzweigungskupplung 45 geschlossen ist, kann lediglich jeweils eine Übertragungseinheit 50, 60, 70 aus einem der beiden Leistungspfade I, II genutzt werden, um die Leistung auf die zweite Welle 20 zu übertragen. Wie bereits zuvor erläutert, ist die Verzweigungseinheit 40 mit der Planetenstufe 41 und der Verzweigungskupplung 45 im Leistungsfluss hinter den Übertragungseinheiten 50, 60, 70 angeordnet.

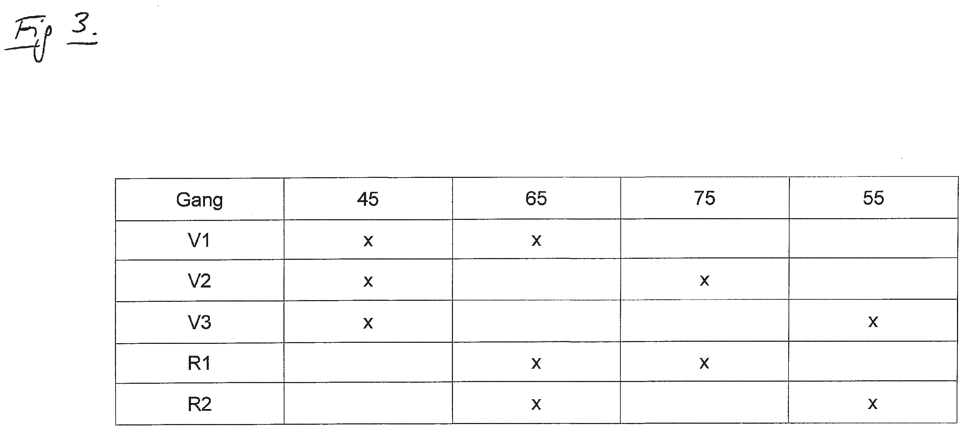

Die Fig. 3 zeigt eine Schaltmatrix der Schaltgruppe gemäß den Figuren 1 und 2. Insgesamt sind drei Vorwärtsgänge V1, V2, V3 und zwei Rückwärtsgänge R1, R2 vorgesehen, die Vorwärtsgänge werden durch die Einzelschaltung der einzelnen Übertragungseinheiten 55, 65, 75 gebildet, sodass die Verzweigungskupplung 45 und jeweils eine Übertragungskupplung 55, 65, 75 geschlossen sind. Hierbei wird zunächst die Übertragungskupplung 65, dann die Übertragungskupplung 75 und erst anschließend die Übertragungskupplung 55 geschlossen.

Die Rückwärtsgänge R1, R2 werden durch Kombination der Leistungspfade I, II miteinander erzielt, wobei die Übertragungseinheit 60 mit einer der Übertragungseinheiten 50, 70 kombiniert wird. Folglich ist die Verzweigungskupplung 45 geöffnet und die Übertragungskupplung 65 und eine der Übertragungskupplungen 55, 75 sind geschlossen.

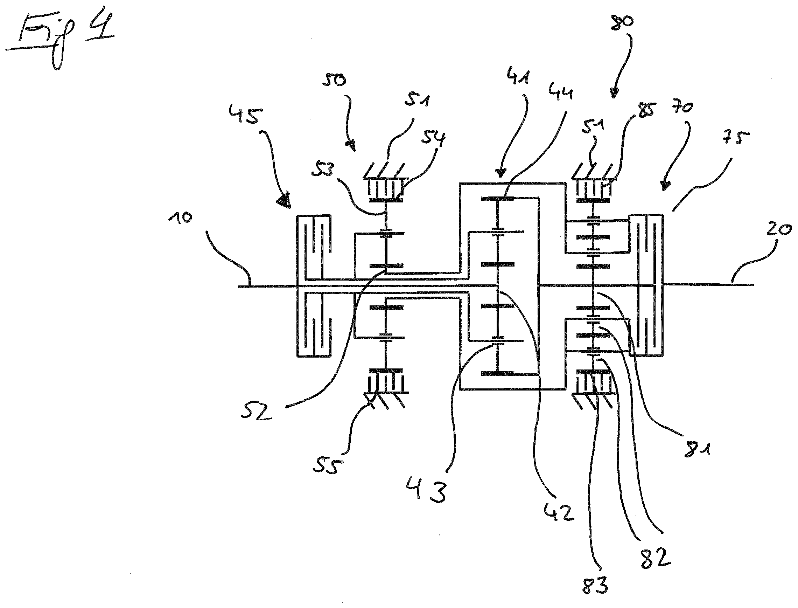

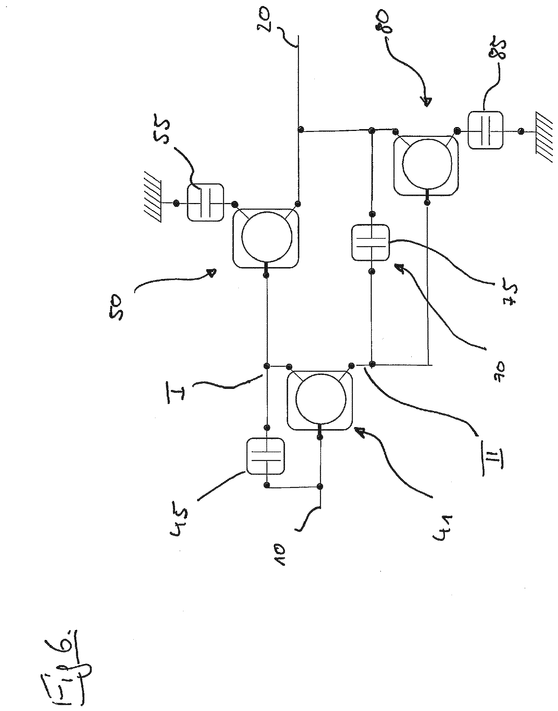

Die Fig. 4 zeigt die erfindungsgemäße Schaltgruppe gemäß einer zweiten Ausgestaltungsvariante, bei der im Gegensatz zu der in der Fig. 1 dargestellten Version die Verzweigungseinheit 40 nunmehr am Leistungseingang angeordnet ist und somit unmittelbar an die erste Welle 10 anschließt. Hierzu ist der innere Lamellenträger der Planetenkupplung 45 unmittelbar mit dem Sonnenrad 42 der Planetenstufe 41 und der äußere Lamellenträger mit dem Planetenträger 43 der Planetenstufe 41 verbunden, sodass entsprechend über das Sonnenrad 42 und den Planetenträger 43 die beiden Leistungspfade I, II gebildet werden können. Die Anordnung der Verzweigungseinheit 40 im Leistungseingang ergibt sich insbesondere sehr deutlich anhand einer vergleichenden Betrachtung mit der Fig. 6, wobei in konstruktiver Hinsicht die Planetenstufe 41 zwischen der Übertragungseinheit 50 und der Übertragungseinheit 80 angeordnet ist. Die Übertragungseinheit 70 ist auch hier analog zu der ersten Ausgestaltungsvariante als Direktgang ausgebildet. Im Gegensatz dazu sind die Übertragungseinheiten 50, 80 beide als Planetenstufen ausgestaltet. Die Übertragungseinheit 50 weist hierzu ein Sonnenrad 52, einen Planetenträger 53 und ein Hohlrad 54 auf, wobei das Hohlrad 54 über eine als Hohlradbremse ausgebildete Übertragungskupplung 55 gegenüber dem Gehäuse 51 festgestellt werden kann. Der Planetenträger 53 ist ferner unmittelbar mit dem inneren Lamellenträger der Verzweigungskupplung 45 und damit gleichzeitig auch unmittelbar mit dem Planetenträger 43 der Planetenstufe 41 verbunden.

Auch die Übertragungseinheit 80 verfügt über ein Sonnenrad 81 und ein Hohlrad 83, das analog zu Übertragungseinheit 50 mittels einer als Hohlradbremse ausgebildeten Übertragungskupplung 85 gegen das Gehäuse 51 feststellbar ist. Es ergibt sich jedoch die Besonderheit, dass die Übertragungseinheit 80 über zwei Planetenträger 82 verfügt, die koaxial zueinander angeordnet und miteinander verbunden sind. Darüber hinaus stehen sie in einer unmittelbaren Verbindung zum Sonnenrad 52 der Übertragungseinheit 50. Durch die zwei Planetenträger 82 wird erreicht, dass die Übertragungseinheit 80 in einem einzeln zugeschalteten Schaltzustand einen Rückwärtsgang bildet bzw. eine Umkehr der Drehrichtung der zweiten Welle 20 bewirkt. Diese zweite Welle 20 ist unmittelbar mit dem Planetenträger 82 verbunden. Darüber hinaus kann durch Zukopplung der Übertragungskupplung 75, der Übertragungseinheit 70 eine Ankopplung an das Sonnenrad 81 erfolgen.

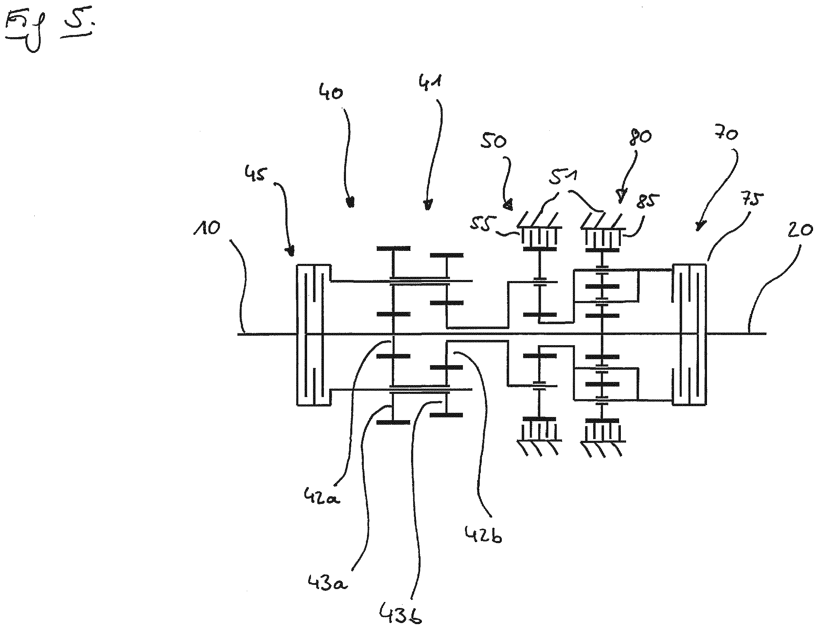

Die Fig. 6 verdeutlicht in diesem Zusammenhang noch einmal, welche Übertragungseinheiten 50, 70, 80 in den Leistungspfaden I, II angeordnet sind. Demnach sind die Übertragungseinheit 50 im ersten Leistungspfad I und die Übertragungseinheiten 70, 80 im zweiten Leistungspfad II angeordnet. Dieses Leistungsflussdiagramm gilt analog auch für eine dritte Ausgestaltungsvariante gemäß der Fig. 5.

Hierbei unterscheiden sich die Schaltgruppen der beiden Figuren 4 und 5 im Wesentlichen durch die konkrete Ausgestaltung der Verzweigungseinheit 40. Anstelle eines Hohlrades weist diese nunmehr zwei nebeneinander angeordnete Planetenstufen 41 auf, die jeweils ein Sonnenrad 42a, 42b und einen Planetenträger 43a, 43b aufweisen. Die beiden Planetenträger 43a, 43b sind unmittelbar miteinander und mit dem äußeren Lamellenträger der Verzweigungskupplung 45 verbunden, die wiederum an die erste Welle 10 anschließt. Folglich bewirkt eine Rotation der ersten Welle 10 eine Rotation des Planetenträgers 43a, 43b. Das erste Sonnenrad 42a schließt ferner an den inneren Lamellenträger der Verzweigungseinheit 45 an, sodass bei einer Zukopplung auch das Sonnenrad 42a die gleiche Rotationsgeschwindigkeit aufweist wie die erste Welle 10. Die Leistungsausgänge der Verzweigungseinheit 40 werden über das erste Sonnen-rad 42a sowie über das zweite Sonnenrad 42b gebildet, wobei diese Leistungs-ausgänge analog zu der Ausgestaltungsvariante gemäß der Fig. 4 ausgestaltet sind.

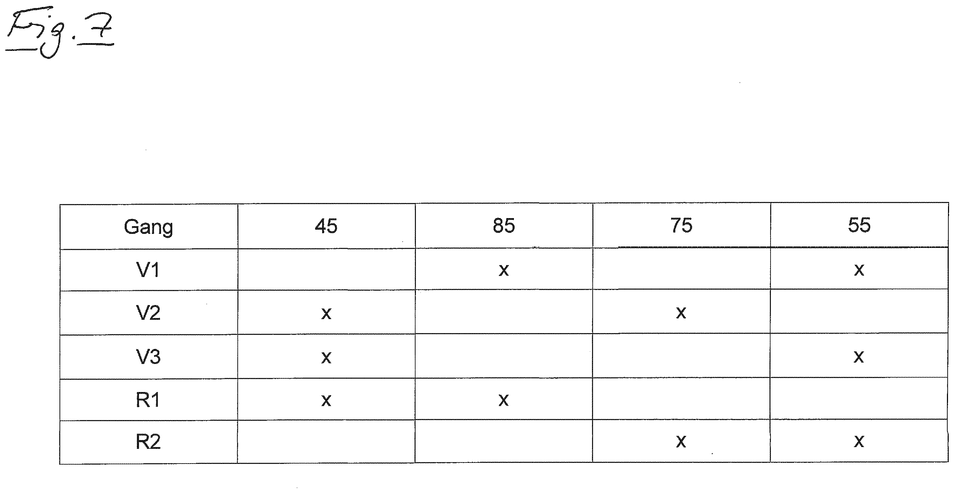

Die Fig. 7 zeigt die Schaltmatrix für die Schaltgruppen gemäß den Figuren 4 bis 6. Demnach lassen sich nunmehr zwei Vorwärtsgänge V2, V3 direkt durch Zuschalten der Verzweigungskupplung 45 sowie den Planetenkupplungen 75, 55 erzielen. Zusätzlich gibt es einen direktschaltbaren Rückwärtsgang R1 durch Zuschalten der Übertragungskupplung 85.

Sofern beide Leistungspfade I, II miteinander kombiniert werden, lässt sich ein weiterer Vorwärtsgang V1 sowie ein weiterer Rückwärtsgang R2 erzielen, wobei die Verzweigungskupplung 45 geöffnet ist. Durch Kombination der Übertragungseinheiten 55, 85 wird der Vorwärtsgang V1 und durch Kombination der Übertragungseinheiten 70, 50 der Rückwärtsgang R2 geschaltet.

## Patentansprüche

1. Schaltgruppe für ein Lastschaltgetriebe mit einer Verzweigungseinheit (40), die eine Planetenstufe (41) und eine der Planetenstufe (41) zugeordnete Verzweigungskupplung (45) aufweist, wobei die Verzweigungseinheit (40) derart eingerichtet ist, dass eine mechanische Leistung in einem ersten Schaltzustand über einen ersten oder einen zweiten Leistungspfad (I, II) und in einem zweiten Schaltzustand sowohl über den ersten als auch über den zweiten Leistungspfad (I, II) von einer ersten auf eine zweite Welle (10, 20) übertragen werden kann,
**dadurch gekennzeichnet, dass** in dem ersten Leistungspfad (I) eine und in dem zweiten Pfad (II) zwei einzeln schaltbare Übertragungseinheiten (50, 60, 70, 80) vorgesehen sind, die sich hinsichtlich ihres Übersetzungsverhältnisses voneinander unterscheiden.

2. Schaltgruppe nach Anspruch 1, **dadurch gekennzeichnet, dass** zumindest eine der Übertragungseinheiten (50, 60, 70, 80) als Planetenstufe ausgebildet ist.

3. Schaltgruppe nach Anspruch 2, **dadurch gekennzeichnet, dass** die erste Welle (10) mit der zumindest einen als Planetenstufe ausgebildeten Übertragungseinheit (50, 60, 70, 80) und die zweite Welle (20) mit der Verzweigungseinheit (40) verbunden ist.

4. Schaltgruppe nach Anspruch 2, **dadurch gekennzeichnet, dass** die zweite Welle (20) mit der zumindest einen als Planetenstufe ausgebildeten Übertragungseinheit (50, 60, 70, 80) und die erste Welle (10) mit der Verzweigungseinheit (40) verbunden ist.

5. Schaltgruppe nach einem der Ansprüche 2 bis 4, **dadurch gekennzeichnet, dass** die zumindest eine als Planetenstufe ausgebildete Übertragungseinheit (80) zwei koaxial zueinander angeordnete Planetenträger (82) aufweist, wobei die Planeten des ersten Planetenträgers mit den Planeten des zweiten Planetenträgers in Eingriff stehen und wobei die Planetenträger miteinander gekoppelt sind.

6. Schaltgruppe nach Anspruch 1 bis 5, **dadurch gekennzeichnet, dass** die Planetenstufe (41) der Verzweigungseinheit (40) zwei nebeneinander angeordnete Planeteneinheiten aufweist, die jeweils ein Sonnenrad (42a, 42b) und ein das Sonnenrad (42a, 42b) umlaufenden Planetenträger (43a, 43b) aufweisen, wobei die Planeteneinheiten unterschiedliche Übersetzungsverhältnisse aufweisen und die Planetenträger (43a, 43b) miteinander verbunden sind.

7. Schaltgruppe nach Anspruch 1 bis 5, **dadurch gekennzeichnet, dass** zumindest eine Übertragungseinheit (60) im ersten und/oder zweiten Leistungspfad (I, II) als Stirnradstufe ausgebildet ist.

8. Schaltgruppe nach Anspruch 6, **dadurch gekennzeichnet, dass** die Stirnradstufe aus zwei Stirnradsätzen (61, 62) besteht, wobei ein Abtriebsstirnrad eines Stirnradsatzes mit einem Antriebszahnrad des zweiten Stirnradsatzes gekoppelt ist.

9. Schaltgruppe nach einem der Ansprüche 1 bis 7, **dadurch gekennzeichnet, dass** zumindest eine Übertragungseinheit (70) im ersten und/oder zweiten Leistungspfad (I, II) als Direktübersetzung ausgebildet ist.

10. Schaltgruppe nach einem der Ansprüche 1 bis 8, **dadurch gekennzeichnet, dass** jede Übertragungseinheit (50, 60, 70, 80) jeweils eine Übertragungskupplung (55, 65, 75, 85) aufweist oder als Übertragungskupplung (55, 65, 75, 85) ausgebildet ist.

11. Schaltgruppe nach einem der Ansprüche 1 bis 9, **dadurch gekennzeichnet, dass** die erste und zweite Welle (10, 20) koaxial zueinander angeordnet sind.

12. Schaltgruppe nach einem der Ansprüche 1 bis 10, **dadurch gekennzeichnet, dass** alle Übertragungseinheiten (50, 60, 70) in dem ersten und dem zweiten Leistungspfad (I, II) so ausgebildet sind, dass sie in dem ersten Schaltzustand der Verzweigungskupplung (45) eine Rotation der zweiten Welle (20) in eine erste Drehrichtung bewirken und die Leistungspfade (I, II) in dem zweiten Schaltzustand derart miteinander zusammengeführt werden, dass die zweite Welle (20) eine Rotation in eine zweite Drehrichtung aufweist, die der ersten Drehrichtung entgegengesetzt ist.

13. Schaltgruppe nach einem der Ansprüche 1 bis 10, **dadurch gekennzeichnet, dass** zumindest zwei Übertragungseinheiten (70, 80) in dem zweiten Leistungs-pfad (I, II) so ausgebildet sind, dass sie in dem ersten Schaltzustand der Verzweigungskupplung (45) entgegengesetzte Drehrichtungen der zweiten Welle (20) bewirken.

14. Getriebe mit einer Schaltgruppe nach einem der Ansprüche 1 bis 12, wobei die Verzweigungseinheit (40) im Leistungsfluss vor den Übertragungseinheiten (50, 60, 70, 80) angeordnet ist.

15. Getriebe mit einer Schaltgruppe nach einem der Ansprüche 1 bis 12, wobei die Verzweigungseinheit (40) im Leistungsfluss hinter den Übertragungseinheiten (50, 60, 70, 80) angeordnet ist.

16. Getriebe mit einer Schaltgruppe nach Anspruch 13 oder 14, wobei der Schaltgruppe zumindest eine weitere Schaltgruppe vor- und/oder nachgeschaltet ist.

17. Verfahren zum Schalten einer Schaltgruppe nach einem der Ansprüche 1 bis 12, wobei die Verzweigungskupplung (45) für einen ersten Schaltzustand geschlossen ist und eine der Übertragungseinheiten (50, 60, 70, 80) aus dem ersten oder zweiten Leistungspfad (I, II) zugeschaltet wird und wobei die Verzweigungskupplung (45) für einen zweiten Schaltzustand geöffnet ist und jeweils eine der Übertragungseinheiten (50, 60, 70, 80) aus dem ersten und dem zweiten Leistungspfad (I, II) zugeschaltet wird.
